(19) Europäisches Patentamt
European Patent Office
Office européen des brevets

(11) **EP 4 307 559 A1**

(12) **EUROPEAN PATENT APPLICATION**

(43) Date of publication:
**17.01.2024 Bulletin 2024/03**

(51) International Patent Classification (IPC):
***H02P 29/028*** (2016.01)

(21) Application number: **22185299.9**

(52) Cooperative Patent Classification (CPC):
**H02P 29/028**

(22) Date of filing: **15.07.2022**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Sociéte Anonyme Belge de
Constructions
Aéronautiques, S.A.B.C.A.
1130 Bruxelles (BE)**

(72) Inventors:
• **Alexandre, Paul
1160 Bruxelles (BE)**
• **de Meulenaer, Jean-François
1050 Bruxelles (BE)**
• **Lalami, Mohamed Esseghir
1300 Wavre (BE)**

(74) Representative: **Calysta NV
Lambroekstraat 5a
1831 Diegem (BE)**

(54) **ELECTROMECHANICAL ACTUATOR FAIL OPERATIONAL SENSING SYSTEM BASED ON TWO ANGULAR SENSORS**

(57)     Actuator for aerospace vehicle comprising an actuating element (4), a motor (1) with a rotor (2), a first rotating element (51), a second rotating element (61), a first and second angle sensor (52, 62) for measuring a first and second angle of the first and second rotating element (51, 61) and an actuator control (7) configured to control the motor (1), based on a current output position of the actuating element (4) and based on the current rotor angle, wherein the current output position of the actuating element (4) and the current angle of the rotor (2) of a current control loop are determined based on the first angle, if the second angle sensor fails, and based on the second angle, if the first angle sensor fails.

Fig. 1

## Description

## Technical Field

The present invention relates to an electromechanical actuator and its associated digital controller for safety critical applications like for example flight control system in aerospace applications.

## Prior art

An electromechanical actuator (EMA) contains an electric motor that moves the actuating element. In a linear EMA, the rotational motion due to the electric motor is converted to a linear motion of an actuation element of the actuator. In a rotary EMA, the rotation of the electric motor is connected to the actuating element directly or through a gearbox. High performance EMA positioning includes field-oriented control of a brushless electric motor requiring the measurement of the rotor angle. The rotor angle can be measured with an angle sensor like a resolver or another type of rotary sensor. Additionally, for the EMA position control, the measurement of the displacement of the output of the actuator is required. Thus, the EMA typically has a sensor dedicated to measuring the actuator position, e.g. a linear variable differential transformer (LVDT) in the case of a linear EMA or a Rotary Variable Differential Transformer (RVDT) in the case of a rotary EMA.

For aerospace applications, critical EMAs require redundancy or a failsafe operation. Therefore, aerospace EMAs require not one angle sensor and one LVDT (or RVDT), but two angle sensors and two LVDTs (or RVDTs). LVDTs (or RVDTs) are often custom and expensive sensors as for aerospace applications, the output position must be sensed with a high precision over the complete output range of the actuator.

GB2527819 proposes a rotary EMA for a high lift system in an air vehicle with two angle sensors with different transmission ratios with respect to the shaft of the high lift system to determine the rotary output position of the EMA. The Vernier principle is used to determine the absolute rotation angle beyond 360° based on the phase difference of the two angle sensors. It is proposed to add two further angle sensors to obtain a redundancy of the sensing of the absolute rotary position of the shaft. Thus, this technology requires four angle sensors without having taken into account sensors that could be necessary for a motor control of the EMA.

US10222233 discloses a linear EMA with a BLDC motor. Two angle sensors with different transmission ratios with respect to the shaft of the EMA allow to measure the rotor position for the field-oriented control (FOC) of the motor and for the absolute shaft output position based on the phase difference of the two angle sensors and the Vernier principle. However, this solution is not destined to aerospace applications and does not provide any redundancy. Thus, a redundancy would again require four sensors for the actuator and has the same drawback as the previously described system.

The Vernier principle is also used for detecting the absolute rotation state of the steering wheel/shaft based on two angle sensors having different transmission ratios with respect to the steering shaft. Examples for such steering shaft sensors are described in US2015032349 or DE1 02010046251 which mention as well that the two angle sensors can be used for redundancy purposes, but without detailing out how the redundancy can be achieved and if the redundancy is done in addition to or as replacement of the Vernier principle.

## Brief summary of the invention

It is the object of the invention to provide an improved EMA for aerospace applications.

Actuator for aerospace vehicle comprising: an actuating element whose output position being movable within an output range of the actuator; a motor driving the actuating element within the output range, wherein the motor comprises a rotor whose rotation causes a movement of the actuating element; a first rotating element rotatably connected with the rotor of the motor; a second rotating element rotatably connected to the rotor of the motor, wherein the first rotating element and the second rotating element have a transmission ratio unequal to one; a first angle sensor for measuring a first angle of the first rotating element; a second angle sensor for measuring a second angle of the second rotating element; an actuator control configured to drive the motor, based on a current output position of the actuating element, such that the actuating element will be positioned in a target output position, wherein the actuator control comprises a motor control configured to control the motor based on the current angle of the rotor of the motor, wherein the current output position of the actuating element and the current angle of the rotor of a current control loop are determined based on at least one of the first angle and the second angle measured in the current control loop, wherein a current control information of the current control loop is determined based on at least one of the first angle and the second angle measured in the current control loop, wherein the current control information is configured to allow in combination with the first angle or second angle measured in the subsequent control loop to determine the output position of the subsequent control loop; wherein the actuator control is configured that, when in the current control loop one of the first angle sensor and the second angle sensor fails, the rotor angle of the rotor of the current control loop is determined based on an angle measured by the other one of the first angle sensor and the second sensor, and the output position of the current control loop is determined based on the angle measured in the current control loop by the other one of the first angle sensor and the second sensor and based on the control information of a previous control loop.

The invention refers further to a flight control system comprising a flight control element of an aerospace vehicle and an actuator as described above for changing the position of the flight control element, wherein the flight control element is configured to control the movement of the aerospace vehicle based on the position of the flight control element.

The invention refers further to a computer program comprising instructions configured, when executed in a processor of an actuator for an aerospace vehicle, to perform an actuator control, whose current control loop comprises the following steps: receive a current first angle from a first angle sensor measuring the first angle of a first rotating element rotatably connected to a rotor of a motor driving the actuating element; receive a current second angle from a second angle sensor measuring the second angle of a second rotating element rotatably connected with the rotor of the motor; determine a current output position of the actuating element and a current angle of the rotor based on at least one of the current first angle and the current second angle; compute, based on the current output position and the current rotor angle, motor control signals for driving the motor such that the actuating element is in a target output position; compute a current control information based on at least one of the first angle and the second angle measured in the current control loop, wherein the current control information is configured to allow in combination with the first angle or second angle received in the subsequent control loop to determine the output position of the subsequent control loop; check, if at least one of the first angle sensor and the second angle sensor fails; if it is determined that the first angle sensor fails, the current second angle sensor is used to determine the current rotor angle and to determine in combination with the previous control information the current output position.

The present invention manages to determine the rotor angle and the output position with only one angle sensor. Thus, a full angle sensor failsafe operation can be provided with only two angle sensors. This reduces the number of sensors in a flight critical aerospace actuator by half.

The dependent claims refer to further advantageous embodiments of the invention.

In one embodiment, the actuator comprises a verification sensor configured to sense in one output position of the actuator a verification information configured to verify the proper working of the actuator. This allows to verify the proper working of the actuator independently from the measurement of one or both of the first and second angle sensor.

In one embodiment, the actuator comprises further an output position sensor for sensing the output position of the actuating element, wherein the actuator control is configured based on the output position measured with the output position sensor to determine the current control information in an initialization mode, to verify the correctness of the current control information or determined output position, or to calibrate the actuator control.

In one embodiment, the transmission between the first rotating element and the second rotating element is realized with gears, wherein the gears comprise at least one anti-backlash gear.

In one embodiment, the first angle sensor is realized as a resolver arranged within or around the first rotational element and/or the second angle sensor is realized as a resolver arranged within or around the second rotational element.

In one embodiment, the actuator control is configured to perform a first health check based on the signal received from the first angle sensor, if the first angle is correctly measured, and to perform a second health check based on the signal received from the second angle sensor, if the second angle is correctly measured, wherein based on the first health check it is determined, if the first angle sensor fails, wherein based on the second health check it is determined, if the second angle sensor fails. Such a health check does not only detect angle sensor which do no longer send an angle measurement, but also those, which send a wrong angle measurement.

In one embodiment, the signal received from the first angle sensor comprises a measured sine value of the first angle and a measured cosine value of the first angle, wherein the first health check is performed based on the sine value and the cosine value of the first angle, wherein the signal received from the second angle sensor comprises a measured sine value of the second angle and a measured cosine value of the second angle, wherein the second health check is performed based on the sine value and the cosine value of the second angle.

In one embodiment, the actuator control is configured to determine the output position and/or the control information based on the first angle and the second angle using the Vernier principle. By combining the Vernier principle using two angle sensors and a redundancy using two angle sensors without increasing the number of angle sensors, the current output position can be determined at least for initialization with the Vernier principle and afterwards, the actuator can be operated with only one angle sensor using the other one as failsafe angle sensor.

In one embodiment, the actuator control is configured in an initialization mode to determine the control information based on the first angle and the second angle using the Vernier principle, wherein the actuator control is configured in an operation mode to determine the output position based on one of the first angle and the second of the current control loop and based on the control information of the previous control loop.

In one embodiment, the control information comprises a first control information and a second control information, wherein the first control information allows to determine the number of revolutions performed by the first angle sensor, wherein the second control information allows to determine the number of revolutions performed by the second angle sensor.

In one embodiment, the output position of the current control loop is determined based on the first angle measured in the first angle sensor in the current control loop and based on the first control information of the previous control loop or the output position of the current control loop is determined based on the second angle measured in the second angle sensor in the current control loop and based on the second control information of the previous control loop.

In one embodiment, the actuator control comprises a first electronic control unit and a second electronic control unit. The first electronic control unit is configured to receive the first angle measurement from the first angle sensor, to determine the current rotor angle based on the first angle of the current control loop, to determine the current output position based on the first angle of the current control loop and based on the control information of the previous control loop, to drive the motor, based on a current output position of the actuating element, such that the actuating element will be positioned in the target output position, to control the motor based on the current rotor angle. The second electronic control unit is configured to receive the second angle measurement from the second angle sensor, to determine the current rotor angle based on the second angle of the current control loop, to determine the current output position based on the second angle of the current control loop and based on the control information of the previous control loop, to drive the motor, based on a current output position of the actuating element, such that the actuating element will be positioned in the target output position, to control the motor based on the current rotor angle, wherein the actuator is controlled by the first electronic control unit, when the second angle sensor or the second electronic control unit fails, and by the second electronic control unit, when the first angle sensor or the first electronic control unit fails.

In one embodiment, in an initialization mode, the first electronic control unit is configured to receive the second angle and to determine the output position or the control information of the current control loop based on the first angle and the second angle of the current control loop using the Vernier principle, wherein in an initialization mode, the second electronic control unit is configured to receive the first angle and to determine the output position or the control information of the current control loop based on the first angle and the second angle of the current control loop using the Vernier principle.

In one embodiment, the actuator is configured for actuating a flight control element of the aerospace vehicle which controls the movement of the aerospace vehicle.

In one embodiment, the actuator is a linear actuator with the actuating element performing a linear movement, wherein the rotation of the rotating element and/or rotor is converted with a conversion element into the linear movement of the actuating element.

In one embodiment, the conversion element and the rotating element is realized by a screw shaft, wherein the screw shaft has a gear, wherein the first angle sensor measures the first angle of the rotation of the screw shaft or measures the first angle of a first gear wheel connected to the gear of the screw, wherein the second angle sensor measures the second angle of the rotation of a second gear wheel connected to the gear of the screw.

In one embodiment, the actuator is a rotational actuator with the actuating element performing a rotational movement causes by the rotation of the rotor or the rotating elements.

In one embodiment, the motor has a plurality of motor electric current phases, wherein the motor control is configured, when the failure of one motor electric current phase is detected, to adapt the motor electric current of the remaining motor electric current phases.

Other embodiments according to the present invention are mentioned in the appended claims and the subsequent description of an embodiment of the invention.

## Brief description of the Drawings

Figure 1 shows conceptionally an embodiment of the actuator according to the invention.
Figure 2 shows a first embodiment for the two angle sensors according to the invention.
Figure 3 shows a second embodiment for the two angle sensors according to the invention.
Figure 4 shows the diagram of the output position of the actuator over the first and second angle of the first and second rotating element.
Figure 5 shows conceptionally a further embodiment of the actuator according to the invention.

In the drawings, the same reference numbers have been allocated to the same or analogue element.

## Detailed description of an embodiment of the invention

Other characteristics and advantages of the present invention will be derived from the non-limitative following description, and by making reference to the drawings and the examples.

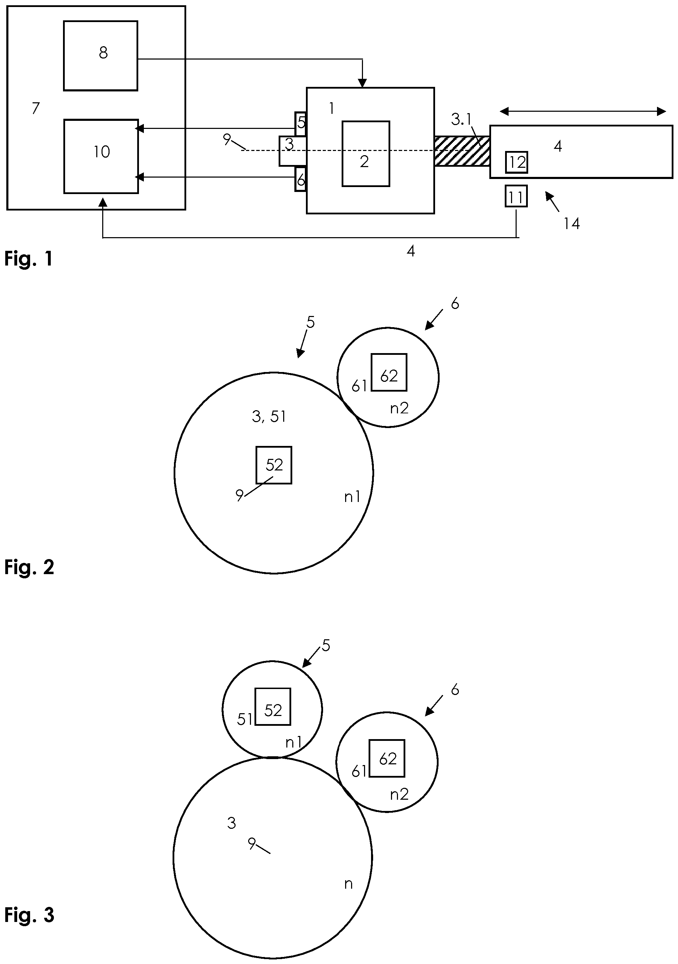

Fig. 1 shows an embodiment of an actuator according to the invention. The actuator is for aerospace applications, preferably for actuating a flight control element of an aerospace vehicle. Aerospace vehicle shall mean any human made object which can fly in the atmosphere or in space or in between of them. In other words, an aerospace vehicle shall mean an air vehicle or a space vehicle. An air vehicle shall mean a flying vehicle which is mainly intended for flying in air, i.e. in the atmosphere. A space vehicle shall mean a vehicle which is mainly intended for operating in space. To operate in space shall mean that the space vehicle can control its motion in space, i.e. can change its position within space by its flight control. The aerospace vehicle shall also include combined air and space vehicle which are configured to operate equally well in air and space. The aerospace vehicle shall preferably be heavier than 100 kilograms (kg), preferably than 500 kg, preferably than 1000 kg. Examples of air vehicles can be aircrafts like airplanes, helicopters, or Unmanned Aerial Vehicles (UAV). Examples of space vehicles can be launch vehicles, space shuttles. The flight control element is an element whose movement controls the attitude of the aerospace vehicle. The flight control element can be aileron, elevator, rudder or spoiler control surfaces of the wings of an air vehicle, the nozzle of the engine of a launcher whose deflection determines the direction of the launcher or flap, planar or grid fin or petal to control the re-entry into the atmosphere. Preferably, the actuator can actuate an actuating element 4 with a force larger than 1000 Newton (N).

The actuator comprises a motor 1, an actuating element 4, a first rotating element 51, a first angle sensor 52, a second rotating element 61, a second angle sensor 62 and an actuator control 7.

The motor 1 comprises a rotor 2 and a stator (not shown). The motor 1 is an electric motor. In one embodiment, the motor 1 is preferably a direct current (DC) motor. The motor 1 is preferably a brush less motor, preferably a brush less DC (BLDC) motor. The (brushless or DC or BLDC) motor 1 has preferably a sinusoidal commutation and/or a sinusoidal back electromotive force (back-EMF). The stator comprises preferably stator windings conducting the motor current driving the motor 1. The motor 1 / stator comprises preferably a plurality of motor phases conducting different electric currents for driving the rotor 2. Each motor electric current phase comprises preferably at least one winding/coil creating the respective magnetic field for this phase. In another embodiment, the motor is an alternating current (AC) motor.

The actuating element 4 of the actuator is movable by the motor 1. The output position of the actuating element 4 defines the current state of the actuator. The actuating element 4 is preferably movable within an output range of the actuator. The output range is defined by a first end position and a second end position. The actuating element 4 can thus have its output position between the first end position and the second end position. The distance between the first end position and the second end position is the output range. The output range corresponds to the distance the actuating element 4 can move. The motor 1 drives the movement of the actuating element 4. Therefore, the movement of the rotor 2 of the motor 1 is connected with the actuating element 4. That means that a movement of the rotor 2 infers/causes a corresponding movement of the actuating element 4. If the rotor 2 moves/rotates in a first motor direction, the actuating element 4 moves in a first actuating direction. If the rotor 2 moves/rotates in a second motor direction (opposite to the first motor direction), the actuating element 4 moves in a second actuating direction (opposite to the first actuating direction).

The actuator can be a linear actuator or a rotative actuator.

The linear actuator converts the rotation of the rotor 2 into a translational movement. The linear actuator comprises thus a conversion element 3 which converts the rotation of the motor 1 /rotor 2 in the translational movement of the actuating element. The rotor 2 can be connected to the conversion element 3 directly (transmission ratio 1) or via a transmission (transmission unequal to 1). The translation movement is preferably a linear movement moving along one straight line. However, it is also possible that the translational movement of the actuating element 4 causes a movement along a curved line. The translational movement of the actuating element 4 is between the first end position and the second end position. The movement direction is defined as the actuating direction. In case of a curved translational movement, the actuating direction shall mean the tangential direction of the movement along the curved line. The output range of a linear actuator is often called the stroke. Preferably, the conversion element is a screw 3. The screw 3 is preferably a roller screw but can also be realized as a ball screw 3 or an ACME screw. The screw axis 9 defines the longitudinal axis of the screw 3 and/or the rotation axis around which the screw 3 rotates. The lead P defines normally the movement of the conversion element in the actuating direction, when the screw 3 performs one full turn (360°) around its axis. That is when the screw turns by 360°, the actuating element moves in the actuating direction by P. The axis of the screw 3 is preferably parallel to the actuating direction. The screw 3 has preferably a threaded portion 3.1 on which a nut is supported, preferably via balls or rollers. The rotational and/or axial position of one of the screw 3 and of the nut is fixed such that the rotation of one of the screw 3 and the nut leads to a translational movement of one of the screw 3 and the nut, preferably in the actuating direction. Thus, the one of the screw 3 or the nut which moves in the actuating direction can then be the actuating element 4. However, it is also possible that their translational movement of the screw 3 or the nut is further transmitted to the final actuating element 4. In one embodiment, the axial position of one of the screw 3 and the nut is fixed and the rotational position of the other one of the screw 3 and the nut is fixed such that the rotation of the one with the fixed axial position, leads to the translational movement of the other one of the screw 3 and the nut with the fixed rotational position. In one example, the axially fixed screw 3 is rotated and moves the nut in the translational direction because the nut is rotationally fixed . In another example, the axially fixed nut is rotated and the screw 3 moves in the translational direction. In another embodiment, the rotational and axial position of one of the screw 3 and of the nut is fixed such that the rotation of the other one of the screw 3 and the nut leads to a translational movement of the other one of the screw 3 and the nut. For example, the nut can be fixed axially and rotationally so that a rotation of the screw 3 leads to a translational movement of the screw 3. The rotor 2 and the screw 3 can have a transmission in between. In the present embodiment, the transmission ratio between the rotor 2 and the screw 3 is one. However, any other transmission ratio between the rotor 2 and the screw 3 is possible.

The rotative actuator causes a rotative movement of the actuating element around an actuating axis, i.e. an angular movement of the actuating element 4. The actuating direction is thus a rotational direction. The output position of the actuating element 4 defines the current angular state of the actuator. The output range is defined by the first (angular) end position and the second (angular) end position. The actuating element 4 can thus have its (angular) output position between the first (angular) end position and the second (angular) end position. The (angular) output range of the actuating element can be more than 360°. In this case, the angular output position shall be defined as the absolute angular output position which defines the current rotation angle around the actuating axis and the current number of revolutions of the actuating element, i.e. the absolute angular output position provides also angle values beyond 360°. For example, the first end position could be 0° and the second end position could be 2000°. The output range is thus an angular distance. The motor 1 drives the movement of the actuating element 4. The first actuating direction is a first rotational direction, and the second actuating direction is a second opposite rotational direction.

The first rotating element 51 is rotatably supported around a first rotation axis. The first rotating element 51 is rotatably coupled/connected to the rotor 2 of the motor 1. This means a rotation of the rotor 2 infers/causes a corresponding rotation of the first rotating element 51 (and/or vice versa). If the rotor 2 rotates in the first rotor direction, the first rotating element 51 rotates in a first first rotating direction. If the rotor 2 rotates in the second rotor direction, the first rotating element 51 rotates in a second first rotating direction (opposed to the first first rotating direction). The current angle of the rotor 2 (current rotor angle) defines the current first angle of the first rotating element 51. The first rotating element 51 and the rotor 2 have a first rotor transmission ratio. The first rotor transmission ratio is preferably such that the angle of the first rotating element 51 defines also the angle of the rotor 2. The first rotor transmission ratio TR1 can be one or a natural number such that one full rotation of the rotor 2 causes a full rotation of the first rotating element 51 (TR1=1) or a partial rotation of the first rotating element 51 of an angle being 360° divided by the transmission ratio TR1 being a natural number of two or larger. Like this, the current angle of the rotor 2 (current rotor angle) can be determined directly from the measurement of the current first angle of the first rotating element 51. However, it is also possible that other transmission ratios TR1 are used such that the current rotor angle can be determined based on the current first angle and an additional information (like the control information or the current second angle).

The first rotating element 51 is coupled/connected to the actuating element 4, in case of a linear actuator over the conversion element 3, preferably the screw 3. This means a rotation of the first rotating element 51 infers/causes a corresponding movement of the actuating element 4 (and/or vice versa). If the first rotating element 51 rotates in the first first rotating direction, the actuating element 4 moves in the first actuating direction. If the first rotating element 51 rotates in the second first rotating direction, the actuating element 4 moves in the second actuating direction. The current output position of the actuating element 4 defines the current first angle of the first rotating element 51. Since the movement of the actuating element 4 over the output range of the actuator necessitates more than one revolution of the first rotating element 51, the current first angle of the first rotating element 51 does not define (alone) the current output position of the actuating element 4.

The second rotating element 61 is rotatably supported around a second rotation axis. The second rotating element 61 is rotatably coupled/connected to the rotor 2 of the motor 1. This means a rotation of the rotor 2 infers/causes a corresponding rotation of the second rotating element 61 (and/or vice versa). If the rotor 2 rotates in the first rotor direction, the second rotating element 61 rotates in a first second rotating direction. If the rotor 2 rotates in the second rotor direction, the second rotating element 61 rotates in a second second rotating direction (opposed to the first second rotating direction). The current angle of the rotor 2 (current rotor angle) defines the current second angle of the second rotating element 61. The second rotating element 61 and the rotor 2 have a second rotor transmission ratio. The second rotor transmission ratio is preferably such that the angle of the second rotating element 61 defines also the angle of the rotor 2. The second rotor transmission ratio TR2 can be one or a natural number such that one full rotation of the rotor 2 causes a full rotation of the second rotating element 61 (TR1=1) or a partial rotation of the second rotating element 61 of an angle being 360° divided by the transmission ratio TR2 being a natural number of two or larger. Like this, the current angle of the rotor 2 (current rotor angle) can be determined directly from the measurement of the current second angle of the second rotating element 61. However, it is also possible that other transmission ratios TR2 are used such that the current rotor angle can be determined based on the current second angle and an additional information (like the control information or the current second angle).

The second rotating element 61 is coupled/connected to the actuating element 4, in case of a linear actuator over the conversion element 3, preferably the screw 3. This means a rotation of the second rotating element 61 infers/causes a corresponding movement of the actuating element 4 (and/or vice versa). If the second rotating element 61 rotates in the first second rotating direction, the actuating element 4 moves in the first actuating direction. If the second rotating element 61 rotates in the second second rotating direction, the actuating element 4 moves in the second actuating direction. The current output position of the actuating element 4 defines the current second angle of the second rotating element 61. Since the movement of the actuating element 4 over the output range of the actuator necessitates more than one revolution of the second rotating element 61, the current second angle of the second rotating element 61 does not define (alone) the current output position of the actuating element 4.

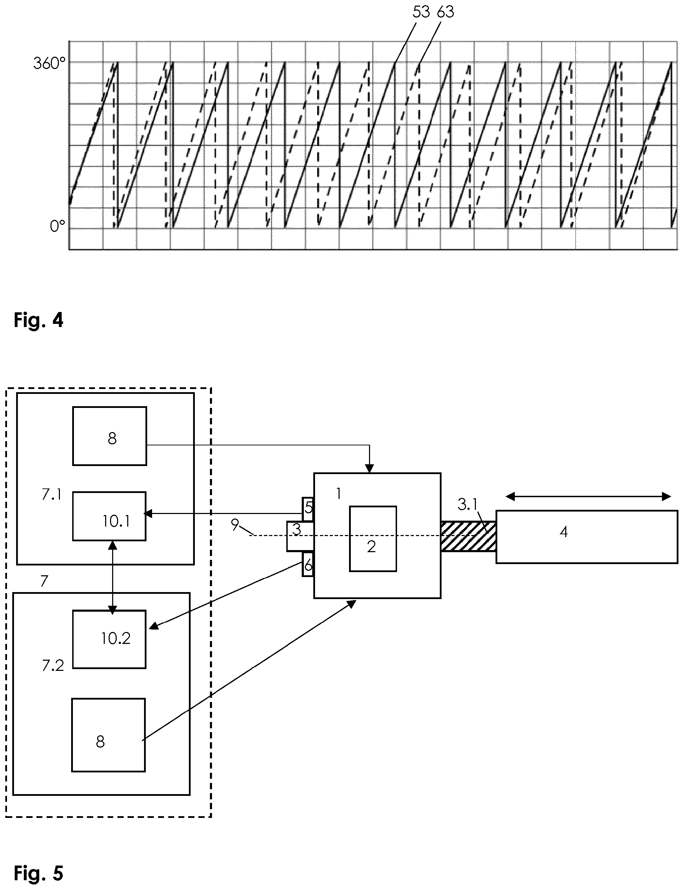

The transmission ratio between the first rotating element 51 and the second rotating element 61 is unequal to 1. In other words, the same change of the output position of the actuating element 4 will cause a different (angle) change for the first angle of the first rotating element 51 than for the second angle of the second rotating element 61. This is shown in Fig. 4 which shows on the y-axis the first angle 53 and the second angle 63 over the output position of the actuating element 4 (x-axis). Due to the different movement of the first rotating element 51 and the second rotating element 61 (due to transmission ratio unequal to 1).

The first rotating element 51 and the second rotating element 61 are preferably realized as gearwheels. However, the rotating elements 51 and 61 can also be realized as other elements with a rotational transmission ratio (unequal 1) between them. To achieve a transmission ratio between the first rotating element 51 and the second rotating element 61 unequal 1, the first rotating element 51 can have a different number of teeth n1 than the number of teeth n2 of the second rotating element 61. Fig. 2 and 3 show two embodiments for the two rotating elements 51, 61.

In the first embodiment in Fig. 2, the first rotating element 51 rotates around the screw axis 9 (i.e. screw axis 9 corresponds to the first rotation axis) and the transmission ratio between the screw 3 and the first rotating element 51 is one. In other words, the first rotating element 51 is mounted on the screw 3 so that it rotates with the screw 3. Mounted on the screw 3 shall also include the case that the gear wheel 51 is integrated in the screw 3. The second rotating element 61 is realized as a second gear wheel 61 with n2 teeth engaging in the teeth of the first rotating element 51 so that the rotation of the first rotating element 51 is transferred to the rotation of the second rotating element 61 with a transmission ratio of n/n2. As shown in Fig. 1, the rotor 2 is here arranged coaxially with the rotating axis 9 of the screw 9 and/or the first rotating element 51 and/or arranged with a first rotor transmission ratio TR1=1 and/or with a transmission ration between the rotor 2 and the screw 3 of 1. The first rotor transmission ratio of TR1=1 allows to get the rotor angle directly from the first angle. However, other arrangements of the rotor 2 in relation to the screw are possible. As will be explained later, the Vernier principle (also called Nonius principle) can be used to determine the absolute output position of the actuating element 4 based on the phase difference of the first and second angle. To guarantee in the first embodiment that each output position in the output range corresponds to one unique phase difference between the first angle and the second angle, the following condition must be met

$$\frac{n_2}{n_2 - n_1} * P > S$$

with n1 being the number of teeth of the first rotating element 51, n2 being the number of teeth of the second rotating element 61, P being the lead of the screw 3 and S being the stroke of the actuator or actuating element 4.

In the second embodiment, the first rotating element 51 is not mounted on the screw 3 but is realized as an additional gear wheel 51 engaging as well in the gear wheel mounted on the screw 3 (as the second gear wheel 61). The first gear wheel 51 has n1 teeth and the gear wheel mounted on the screw has n teeth. To guarantee in the first embodiment that each output position in the output range corresponds to one unique phase difference between the first angle and the second angle, the following condition must be met

$$\frac{1}{\frac{n}{n_1} - \frac{n}{n_2}} * P > S$$

with n being the number of teeth of the screw 3, n1 being the number of teeth of the first rotating element 51, n2 being the number of teeth of the second rotating element 61, P being the lead of the screw 3 and S being the stroke of the actuator or actuating element 4.

When the transmission of the first and/or second rotational element 51, 61 are realized by gearwheels, there is exists a certain gear backlash. This leads to some errors, when determining the rotor position or the output position based on the measured angle of the respective rotational element and the respective transmission ratio. While this backlash is negligible in many actuator applications, it might be very important for aerospace application, where precision has the utmost importance. Therefore, one improvement could be to use at least one anti-backlash gear in the transmission with the first and second rotational element 51, 61. One solution for an anti-backlash gear is to replace one gear wheel with a corresponding anti-backlash gear wheel. The anti-backlash gear wheel comprises two gearwheels arranged around the same rotational axis being forced in opposite rotational directions so that teeth of the two gearwheels are forced on both sides of the tooth of the respective gear wheel engaging in the anti-backlash gear wheel. In the embodiment of Fig. 2, the first gear wheel 51 or the second gear wheel 61 can be realized as anti-backlash gear wheel, preferably the second gear wheel 61. In the embodiment of Fig. 3, either the gear wheel 3 can be realized as anti-backlash gear wheel or the gear wheels 51 and 61 can both be realized as anti-backlash gear wheel. It is also possible that only the first gear wheel 51 is realized as anti-backlash gear wheel, while the second gear wheel 61 is not. In this case, the first angle sensor could be used as main sensor to be used as long the first angle sensor does not fail. The second angle measurement system 6 would then provide a larger error, which would be however acceptable as it is used only as a fail-safe.

The first angle sensor 52 is configured to measure the first angle of the first rotating element 51. The first angle measured by the first angle sensor is a value between 0° and 360° (or between 0 and $2\pi$ or any corresponding angle range indicating a full rotation) indicating the current rotation state of the first rotating element. The first angle sensor 52 is preferably a contactless sensor. The first angle sensor 52 is preferably a magnetic or inductive or a capacitive sensor. The first angle sensor 52 can be for example a resolver, a hall effect sensor, giant magneto resistance (GMR) sensor, a tunnel magneto resistance (TMR) sensor, a capacitive sensor, or other sensors. The first angle sensor 52 provides a first measurement signal indicating the first angle of the first rotating element 51. The first measurement signal comprises preferably a first first measurement signal (the sine of the first angle) and a second first measurement signal (the cosine of the first angle).

The second angle sensor 62 is configured to measure the second angle of the second rotating element 61. The second angle measured by the second angle sensor is a value between 0° and 360° (or between 0 and $2\pi$ or any corresponding angle range indicating a full rotation) indicating the current rotation state of the second rotating element. The second angle sensor 62 is preferably a contactless sensor. The second angle sensor 62 is preferably a magnetic or inductive or capacitive sensor. The second angle sensor 62 can be for example a resolver, a hall effect sensor, giant magneto resistance (GMR) sensor, a tunnel magneto resistance (TMR) sensor, a capacitive sensor, or other sensors. The second angle sensor 62 provides a second measurement signal indicating the second angle of the second rotating element 51. The second measurement signal comprises preferably a first second measurement signal (the sine of the second angle) and a second second measurement signal (the cosine of the second angle).

In a preferred embodiment, a resolver is used for the first angle sensor 52 and/or for the second angle sensor 62. The resolver has as a stator (fixed portion) and a rotor (first/second rotational element 51, 61). The resolver has an induction element in the rotor and (at least) two secondary windings in the stator. The induction element can be a primary winding or in a preferred embodiment a saliency pole(s). In the latter case, the stator can additionally have a primary winding. Preferably, the secondary windings are arranged radially to the induction element in the rotor. The secondary windings can be arranged around or within the rotor. In a preferred embodiment, the secondary windings are arranged within the rotor, i.e. within the first/second rotational element 51, 61. Preferably, a first resolver 52 measures the first angle of the first rotational element 51. Preferably, a first stator (with the secondary windings) of the first resolver 52 is arranged radially within the first rotational element 51. Preferably, a second resolver 62 measures the second angle of the second rotational element 61. Preferably, a second stator (with the secondary windings) of the second resolver 62 is arranged radially within the second rotational element 61. Resolvers provide a very precise angle measurement, even in harsh and noisy environments. In addition, they do not require the electronics like semiconductor chips, PCBs, etc for the angle measurement. Such electronics might fail in the harsh conditions of aerospace applications.

The first rotating element 51 and the first angle measurement sensor 52 provide the first angle measurement system 5. The second rotating element 61 and the second angle measurement sensor 62 provide the second angle measurement system 6.

In a preferred embodiment, the actuator comprises a verification sensor 14 configured to sense in one output position of the actuator a verification information configured to verify the proper working of the actuator. The verification sensor 14 is preferably a discrete verification sensor, i.e. a sensor which can sense the verification information (only) in one or more discrete actuator positions. This means that the actuating element 4 must be driven in one (or more) reference position, before measuring the verification information with the verification sensor 14. The reference position corresponds to one (or more) well-defined discrete output positions of the actuator. The verification sensor 14 can be arranged at any (moving) element of the actuator mechanism transferring the rotor movement to the actuating element 4. In one embodiment, the verification sensor 14 is arranged at the actuating element 4 measuring the output position of the actuating element. In this case the verification sensor 14 is realised as output position sensor 14 as described in more detail below. However, the verification sensor 14 could also be realized on the screw 3 or at one or two of the first and second rotating element 51, 61. Such a rotative verification sensor would allow to measure the verification information at one angle of the respective rotative part of the actuator mechanism. Thus, the verification information could be measured at several reference positions of the actuator, i.e. each time the respective rotative part is in an angle reference position. The verification information is measured preferably by driving the actuating element 4 in a reference position and performing the measurement with the verification sensor 14. If the verification information measurement with the verification sensor 14 corresponds to an expected measurement result, it is concluded that the respective element of the actuator mechanism is in the correct place and the actuator mechanism is working properly. If the verification information measurement with the verification sensor 14 does not correspond to an expected measurement result, it is concluded that the respective element of the actuator mechanism is not in the correct place and the actuator mechanism is not working properly. In this case, the actuator would require maintenance. The measurement of the verification information by the verification information is independent of the measurement of the first and/or second rotation sensor 52, 62. Thus, if an error in one of the rotation sensors 52, 62 would lead to a wrong initialization of the actuator control, this could be detected with the verification sensor 14. Even if preferred, such a verification sensor 14 is not absolutely necessary for the invention.

In a preferred embodiment, the actuator comprises an output position sensor 14. The output position sensor 14 measures the output position of the actuating element 4. Preferably, the output position sensor 14 is a discrete output position sensor 14 which does not measure the output position of the actuating element 4 over the whole output range, but just over a reduced output range (smaller than the output range). Preferably, the output position of the actuating element 4 is measured with the output position sensor 14 only, when the actuating element 4 is in a reference output position. Contrary to a LVDT (or RVDT), the discrete output position sensor 14 does not allow to get the output position over the full output range, but only in a reduced output range, in particular in the reference position. But this is sufficient to verify the correct working of the actuator control or to calibrate the actuator control. Such a discrete output position sensor is much simpler than a complex LVDT or RVDT. The discrete output position could have a first sensing element 11 in a fixed position close to the actuating element and a second sensing element 12 on the actuating element 4. The first and the second sensing elements 11 and 12 are arranged such that they are close to each other, when the actuating element 4 is in the reference position. Thus, in the reference position, the output position of the actuating element 4 can be precisely determined. This allows to see, if the reference position as assumed by the actuator control 8 actually corresponds to the true position of the actuating element 4. If there is a difference between them, the output position of the actuating element 4 measured with the discrete output position sensor 14 can be used to send a failure warning or to correct/calibrate the actuator control 8. Even if preferred, such an output position sensor 14 is not absolutely necessary for the invention.

The actuator control 7 is configured (in the operation mode) to control the operation of the actuator. The actuator control receives (in the operation mode) a desired target output position of the actuating element 4 as input. The actuator control 7 is configured (in the operation mode) to drive/control the motor 1, based on a current output position of the actuating element 4, such that the actuating element 4 will be/is positioned in the target output position. In many situations in aerospace application, an external force is acting on the actuating element 4. Therefore, the actuator control 7 is also configured to drive/control the motor 1, based on a current output position of the actuating element 4, such that the actuating element 4 will maintain the target output position (when the target output position does not change, and an external force acts on the actuating element 4).

The actuator control 7 comprises a motor control 8. The motor control controls the motor 1 following the input from the actuator control 7 based on the current rotor angle. Thus, the motor control is a control with the motor/rotor position sensor. The motor control is preferably a sinusoidal control. The motor control is preferably a field-oriented control (FOC). The motor control 8 provides the (windings of the plurality of phases of the) motor 1 with an AC electric current based on the input from the actuator control 7 (and based on the current rotor angle). The AC electric current can be created by an inverter (converting a DC electric current into an AC electric current desired for the motor 1). The motor control 8 could control the inverter for the motor 1.

The actuator control 7 comprises preferably a sensor processing means 10. The sensor processing means 10 is configured to receive the first angle / the first measurement signal from the first angle sensor 52 and to receive the second angle / second measurement signal from the second angle sensor 62.

The sensor processing means 10 according to the invention is configured to determine, if the first angle sensor 52 fails and if the second angle sensor 62 fails. In the simplest case, it is determined, if the first angle sensor 52 fails by checking, if the first measurement signal is received from the first angle sensor 52 (then the first angle sensor 52 is considered to be ok) or if the first measurement signal is not received (then the first angle sensor 52 is considered to fail). Analogously, it is determined, if the second angle sensor 62 fails by checking, if the second measurement signal is received from the second angle sensor 62 (then the second angle sensor 62 is considered to be ok) or if the second measurement signal is not received (then the second angle sensor 62 is considered to fail). In a preferred embodiment, the sensor processing means 10 is configured to perform (in addition to the above check) a health check based on the first/second measurement signal received. If the health check of the first measurement signal indicates that the first measurement signal is healthy, the first angle sensor 52 is considered to work properly, otherwise the first angle sensor 52 is considered to have failed. If the health check of the second measurement signal indicates that the second measurement signal is healthy, the second angle sensor 62 is considered to work properly, otherwise the second angle sensor 62 is considered to have failed. The health check based on the first measurement signal is done based on a correspondence check of the first first measurement signal and the second first measurement signal, i.e. if the first first measurement signal and the second first measurement signal yield the same measured first angle (within an accepted error range). Preferably, a first first angle is calculated based on the sine of the first angle received with the first first measurement signal, and a second first angle is calculated based on the cosine of the first angle received with the second first measurement signal, and the first first angle and the second first angle are compared to see, if their difference is within the accepted error range. The health check based on the second measurement signal is done based on a correspondence check of the first second measurement signal and the second first measurement signal, i.e. if the first first measurement signal and the second first measurement signal yield the same measured first angle (within an accepted error range). Preferably, a first second angle is calculated based on the sine of the second angle received with the first second measurement signal, and a second second angle is calculated based on the cosine of the second angle received with the second second measurement signal, and the first second angle and the second second angle are compared to see, if their difference is within the accepted error range. Such a health check allows to detect also when an angle sensor 52, 62 sends a wrong measurement signal to determine that the angle sensor 52, 62 fails. In case, one of the first angle sensor 52 and the second angle sensor 62 fails and the other one is working, the failed one of the first angle sensor 52 and the second angle sensor 62 is called the failed angle sensor, and the working one the first angle sensor 52 and the second angle sensor 62 is called the working angle sensor. The angle measured with the working angle sensor is called the working angle. The angle of the failed angle sensor is called the failed angle.

The sensor processing means 10 is configured to determine the current rotor angle (current rotor position) and the current output position based on at least one of the first angle and the second angle received.

The actuator control 7 can be in an initialization mode or an operation mode. The operation mode itself can be separated into a first operation mode in which both angle sensors work (or at least the angle sensor used in the first operation mode works) and into a second operation mode in which only one of the angle sensor work, i.e. in which one of the first and second angle sensors 52, 62 are detected to fail.

The actuator control 7 work in control loops. Current first angle, current second angle, current output position, current rotor angle, current control information shall indicate that these values refer to the current control loop. The current first angle is the angle of the first rotating element 51 measured with or received from the first angle sensor 52 in the current control loop. The current second angle is the angle of the second rotating element 61 measured with the second angle sensor 62 in the current control loop. The current control information is the control information calculated in the current control loop and used for the next control loop. The current rotor angle is the rotor angle of the motor 1 determined in the current control loop based on at least one of the current first angle and the current second angle. The current output position is the output position of the actuating element 4 in the current control loop determined based on at least one of the current first angle and the current second angle. The current control loop is the control loop happening in real-time. The previous first angle, previous second angle, previous output position, previous rotor angle, previous control information shall indicate that these values refer to the previous control loop which has happened (directly) before the current control loop.

In a/each control loop, the current first angle is preferably measured with the first angle sensor 52, and/or the current second angle is preferably measured with the second angle sensor 62 (both at the same time). In a/each control loop, the current first angle is preferably received from the first angle sensor 52 in the actuator control 7, and/or the current second angle is preferably received from the second angle sensor 62 in the actuator control 7. Preferably, in a/each control loop, both angles are measured/received. In a/each control loop, it is checked, if one of the first angle sensor 52 and/or the second angle sensor 62 fails. This can be done based on the current first angle / first measurement signal received from the first angle sensor 52 (for the first angle sensor 52) and/or based on the current second angle / second measurement signal received from the second angle sensor 62 (for the second angle sensor 62). Thus, the actuator control 7 knows in each control loop, if there is a failed angle sensor 52, 62, preferably the actuator control 7 knows, if there are both, only one or none of the first and second angle of the current control loop available. When both are available, the loop can work normally (initialization mode or first operation mode). When only one angle is available, the actuator control 7 works in the fail-safe mode or in the second operation mode. If the first operation mode requires only one angle, let us assume the first angle, it is sufficient to check in each control loop of the operation mode only the first angle sensor 52, if it works properly, as long as it is determined that it works. In this case, it could continue in the first operation mode using the first angle without the necessity to check as well the sound operation of the second angle sensor 62. Only, in case the first angle sensor 52 is detected to fail, is the second angle sensor 62 checked for proper functioning to operate the control loop in the second operation mode. When no angle is available because both angle sensors 52, 62 are not working, the actuator control 7 cannot work any longer. The steps performed in each control loop depend on the mode of the actuator control 7.

In the initialization mode or initialization control loop, the sensor processing means 10 is preferably configured to determine a current control information. This current control information can be determined based on the difference between the current first angle and the current second angle using the Vernier principle. This current control information allows (alone or in combination with only one of the current first and second angle) to determine the current output position of the actuating element 4. This current control information could be for example the current output position of the actuating element 4 or the absolute angle of the screw 3, the first rotating element 51 or the second rotating element 52. The absolute angle shall indicate the angle value extending from a first end angle corresponding to the first end position of the actuating element 4 and a second end angle corresponding to the second end position of the actuating element 4, wherein the angle distance between the first end angle and the second end angle is larger than 360°. Thus, this absolute angle indicates not only the current angle with respect to a reference angle of the mentioned element, but also the number of revolutions performed. Thus, the absolute angle of any rotating element in the mechanical transmission chain between the rotor 2 and the conversion element or the actuating element 4 allows unambiguously to determine the current output position of the actuating element 4 (and if necessary the current rotor angle). The mentioned examples of the current control information alone define the output position. The control information can however also be such that the current output position is defined by a combination of the control information and one of the first and second angle. For example, the control information could refer just to the full revolutions of the first rotating element 51, the second rotating element 61 or the screw 3. Thus, the current output position of the actuating element 4 could be determined based on the number of full revolutions and the measured current first or second angle. In this case, the control information could comprise a first control information with the number of revolutions for the first rotating element 51 and a second control information with the number of revolutions for the second rotating element 61. Thus, the current absolute angle of the first rotating element 51 could be determined by the current first control information and the current first angle, and/or the current absolute angle of the second rotating element 61 could be determined by the current second control information and the current second angle. Since each output position in the output range or stroke of the actuator (or any other control information) corresponds to a different difference value, the output position of the actuating element 4 (or the control information) can always be determined based on the first angle and the second angle. The initialization control loop is normally done, when the actuator control 7 is switched on and/or does not know from a previous control loop the previous control information. The initialization mode or control loop fails, if the prior check determines that not both angles are working properly. In the operation mode in the current control loop, the angle processing means 10 is configured to determine the current rotor angle and the current output position based on two of the current first angle, the current second angle and the previous control information. In a first embodiment, the current rotor angle is determined based on (only) one of the current first angle and the current second angle (if the first and/or second rotor transmission ratio allows this). In a second embodiment, the current rotor angle is based on two of the current first angle, the current second angle and the previous control information. It could also be that the first rotor transmission ratio allows to directly determine the rotor angle from the first angle, while the second rotor transmission ratio does not (or vice versa). In this case, the first embodiment could be used, when the first angle is available and the second embodiment, if only the second angle is available. In the operation mode, in the current control loop, motor 1 is controlled based on the current target output position, the current output position and the current rotor angle. Preferably, a motor control input is determined based on the current target output position and the current output position of the actuating element. The motor control input could be for example the target torque. The motor control 8 could then be calculate based on the target motor torque and the current rotor angle the motor current or the control signals for generating this motor current. The control of the motor 1 of an actuator based on the target output position, the current output position and the rotor angle is explained here only for exemplary purposes. Such a control is state of the art and will not be described in more detail. The control of the motor 1 based on the target output position, the current output position and the rotor angle is the same for the first operation mode (normal mode) and for the second operation mode (failsafe mode). In each control loop of the first and second operation mode, the current control information is determined, so that this information is available for the next control loop. The current control information is determined based on at least one of the current first angle and the current second angle and based on the previous control information. If the current control information is determined on a third information which itself is based on at least one of the current first angle and the current second angle and based on the previous control information, the current control information shall be considered to be determined based on at least one of the current first angle and the current second angle and based on the previous control information.

The first operation mode is, preferably when both of the two angle sensors 52, 62 work properly. Thus, when the control loop determines that both angle sensors 52, 62 work properly, it continues the control loop as in the first operation mode. In the current control loop of the first operation mode, the angle processing means 10 is configured to determine the current rotor angle and the current output position based on two of the current first angle, the current second angle and the previous control information. In one embodiment, the current output position of the actuating element 4 is determined based on the first angle and based on the previous control information. The current rotor angle is as well determined based on the current first angle (maybe in combination with the previous control information). The second angle is thus not even used in the first operation mode in this embodiment. In such an embodiment, the failsafe check in the first operation mode could be reduced also to checking only the first angle sensor 52. If the first angle sensor 52 works properly, the second angle sensor 62 cannot be checked and the process continues right away with the processing of the control loop of the first operation mode as described above. Only, if it is detected that the first angle sensor 52 fails, the second angle sensor 62 is checked for correct working and the control loop is realized in the second operation mode. However, it is preferred to check in each control loop the correct working of both angle sensors 52, 62. In another embodiment, the current output information is determined in the first operation mode based on the first angle and the second angle. This can be done as in the initialization mode based on the difference between the first angle and the second angle using the Vernier principle. This can also be done based on the current first angle, the current second angle and the control information of the previous control loop.

The second operation mode is, when one of the two angle sensors fail and do not provide (a correct) angle (failed angle). Thus, when at an control loop, it is determined that the one of the first angle sensor 52 and the second angle sensor 62 fail, the control loop is realized in the second operation mode. In the second operation mode (the failsafe mode), the current output position is determined based on the working angle and based on the previous control information. This includes, if the current output position is calculated from a third information determined based on the current working angle and on the previous control information. The current rotor angle is determined based on the working angle (and if necessary on the previous control information). This includes, if the current rotor angle is calculated from a third information determined based on the working angle (and if necessary on the previous control information). The current control information is updated/determined based on the current working angle and based on the previous control information. This includes, if the current control information is calculated from a third information determined itself based on the current working angle and on the previous control information, for example calculated from the current output position.

Since the control information is updated in each control loop, the current output position (and current rotor angle) can be determined from only one angle measurement/sensor 52, 62. The two angle sensors 52, 62 allow due to the transmission ratio unequal 1 between them to determine in an initializing mode the correct current control information based on the two angle sensors 52, 62 and the Vernier principle. After the initialization, the actuator control 7 can operate with only one of the two angle sensors 52, 62 due the continuously updated control information in each control loop. Thus, the second angle sensor serves after the initialization as failsafe angle sensor which guarantees a failsafe operation, if one of the two angle sensors fail. Due to the health check, also incorrectly working angle sensors are detected, even if they continue to send their incorrect measurement signal. The described embodiment provides a failsafe operation for the failure of an angle sensor without compromising the operation of the flight control system of the aerospace vehicle.

The actuator control 7 can have also a verification mode. In the verification mode, the actuator control 7 verifies the sound working of the actuator control based on the measurement of the verification sensor 14. The verification involves the measurement of the verification information with the verification sensor 14, when the actuating element 7 is in the reference position, and the verification of the proper working of the actuator system based on the verification information. If the verification information confirms that the element of the actuator mechanism comprising the verification sensor is in the correct position (corresponding to the reference position), the actuator control 7 is deemed to work properly. If the verification information yields that the element of the actuator mechanism comprising the verification sensor 14 is not in the correct position (corresponding to the reference position), the actuator control 7 is deemed not to work properly. In a preferred embodiment, the verification mode involves that the actuating element 4 is driven to the reference position, and when the actuating element 4 reaches the reference position, getting/sensing the verification information with the verification sensor 14. Thus, the verification mode works preferably like in the operation mode (preferably like in the first operation mode) until the reference position has been reached.

Preferably, the actuator control 7 is initialized (normally after starting the actuator control 7) using the above-described initialization mode. After the actuator control is initialized, the actuator control 7 is preferably verified in the above-described verification mode. This includes preferably to drive the actuator element 4 into the reference position to perform the verification. If the verification confirms the proper working of the actuator control, the actuator control 7 is switched into the operation mode in which it controls the actuating element 4 based on control input to a desired output position.

In an improved embodiment, the motor control 8 comprises further a failsafe operation for the case of a failure in one of the motor electric current phases. If such a failed motor electric current phase is detected, the motor electric current for the remaining motor electric current phases is adapted to compensate the missing motor electric current phase (and thus avoid strong ripple due to the missing motor electric current phase). The details how such a failure in one of the motor electric current phases is detected and how the remaining motor electric current phases are compensated are disclosed in EP2852050 which shall be incorporated by reference for this purpose. Thus, such an actuator control 7 would provide a failsafe not only for a failure in the sensors of the actuator, but also in the motor electric current phases.

In Fig. 1, one electronic control unit (ECU) comprises the actuator control 7 and is responsible for the first operation mode and the second operation mode control loop.

Fig. 5 shows an alternative embodiment in which the actuator control 7 is realized by two independent ECUs or actuator controls. The first ECU/actuator control 7.1 and/or the second ECU/actuator control 7.2 is/are configured to control in the operation mode the motor 1 based on the current target output position, based on the current output position and based on the current rotor angle. Thus, the motor control 8 of the first ECU/actuator control 7.1 and the second ECU/actuator control 7.2 are the same and correspond to the motor control 8 described above. The first ECU/actuator control 7.1 and the second ECU/actuator control 7.2 distinguish mainly in the first angle processing means 10.1 of the first ECU/actuator control 7.1 and the second angle processing means 10.2 of the second ECU/actuator control 7.2. The first ECU / actuator control 7.1 or the first angle processing means 10.1 is configured to determine, in the operation mode, the current output position and the current rotor angle based on the current first angle received from the first angle sensor 52. The second ECU / actuator control 7.2 or the second angle processing means 10.2 is configured to determine, in the operation mode, the current output position and the current rotor angle based on the current second angle received from the second angle sensor 62. Thus, the first angle sensor system 5 and the first ECU 7.1 provide a full actuator control which is during operation completely independent from the second angle sensor system 6 and the second EUC 7.2 which provide a second actuator control system. Thus, this embodiment provides a failsafe of the sensors and full ECU operation. If the motor control 8 comprises the mentioned failsafe operation for failures of a motor electric current phase failure, even against such failures. Only during the initialization mode, at least one of the ECU 7.1 and 7.2 requires the angle of the respective other. So, the first ECU 7.1 or first angle processing means 10.1 could receive in the initialization mode the second angle (from the second ECU 7.2 or from the second angle sensor 62) for determining the control information based on the difference of the current first and second angle using the Vernier principle. The second ECU 7.2 or second angle processing means 10.2 could receive in the initialization mode the first angle (from the first ECU 7.1 or from the first angle sensor 52) for determining the control information based on the difference of the current first and second angle using the Vernier principle. Alternatively, the second ECU 7.2 or second angle processing means 10.2 could receive in the initialization mode (from the first ECU 7.1 or from the first angle sensor 52) also other information allowing to determine the control information, e.g. the control information determined in the first ECU 7.1. The first ECU 7.1 and the second ECU 7.2 could use different control information. The first ECU 7.1 could use the revolutions or absolute angle of the first rotating element 51 as the first control information, while the second ECU 7.2 could use the revolutions or absolute angle of the second rotating element 52 as the second control information.

To distinguish the adjective "current" in a temporal sense from the subject "current" in the electric sense, the latter is called "electric current" or "motor current" or "motor electric current".

It should be understood that the present invention is not limited to the described embodiments and that variations can be applied without going outside of the scope of the claims.

**Claims**

1. Actuator for aerospace vehicle comprising:

an actuating element (4) whose output position being movable within an output range of the actuator;
a motor (1) driving the actuating element (4) within the output range, wherein the motor (1) comprises a rotor (2) whose rotation causes a movement of the actuating element (4);
a first rotating element (51) rotatably connected with the rotor (2) of the motor (1);
a second rotating element (61) rotatably connected with the rotor (2) of the motor (1), wherein the first rotating element (51) and the second rotating element (61) have a transmission ratio unequal to one;
a first angle sensor (52) for measuring a first angle of the first rotating element (51);
a second angle sensor (62) for measuring a second angle of the second rotating element (61);
an actuator control (7) configured to drive the motor (1), based on a current output position of the actuating element (4), such that the actuating element (4) will be positioned in a target output position, wherein the actuator control (7) comprises a motor control (8) configured to control the motor (1) based on the current angle of the rotor (2) of the motor (1), wherein the current output position of the actuating element (4) and the current angle of the rotor (2) of a current control loop are determined based on at least one of the first angle and the second angle measured in the current control loop, wherein a current control information of the current control loop is determined based on at least one of the first angle and the second angle measured in the current control loop, wherein the current control information is configured to allow in combination with the first angle or second angle measured in the subsequent control loop to determine the output position of the subsequent control loop;

**characterized in that** the actuator control (7) is configured that

when in the current control loop one of the first angle sensor (52) and the second angle sensor (62) fails,

the rotor (2) angle of the rotor (2) of the current control loop is determined based on an angle measured by the other one of the first angle sensor (52) and the second sensor, and

the output position of the current control loop is determined based on the angle measured in the current control loop by the other one of the first angle sensor (52) and the second sensor and based on the control information of a previous control loop.

2. Actuator according to claim 1, comprising a verification sensor configured to sense in one output position of the actuator a verification information configured to verify the proper working of the actuator.

3. Actuator according to claim 1 or 2, wherein the actuator control (7) is configured to perform a first health check based on the signal received from the first angle sensor (52), if the first angle is correctly measured, and to perform a second health check based on the signal received from the second angle sensor (62), if the second angle is correctly measured, wherein based on the first health check it is determined, if the first angle sensor (52) fails, wherein based on the second health check it is determined, if the second angle sensor (62) fails.

4. Actuator according to claim 3, wherein the signal received from the first angle sensor (52) comprises a measured sine value of the first angle and a measured cosine value of the first angle, wherein the first health check is performed based on the sine value and the cosine value of the first angle, wherein the signal received from the second angle sensor (62) comprises a measured sine value of the second angle and a measured cosine value of the second angle, wherein the second health check is performed based on the sine value and the cosine value of the second angle.

5. Actuator according to one of claims 1 to 4, wherein the transmission between the first rotating element (51) and the second rotating element (61) is realized with gears, wherein the gears comprise at least one anti-backlash gear.

6. Actuator according to one of claims 1 to 5, wherein the actuator control (7) is configured to determine the output position and/or the control information based on the first angle and the second angle using the Vernier principle.

7. Actuator according to claim 6, wherein the actuator control (7) is configured in an initialization mode to determine the control information based on the first angle and the second angle using the Vernier principle, wherein the actuator control (7) is configured in an operation mode to determine the output position based on one of the first angle and the second of the current control loop and based on the control information of the previous control loop.

8. Actuator according to one of claims 1 to 7, wherein the actuator control (7) comprises a first electronic control unit and a second electronic control unit,

wherein the first electronic control unit is configured

to receive the first angle measurement from the first angle sensor (52), to determine the current rotor (2) angle based on the first angle of the current control loop, to determine the current output position based on the first angle of the current control loop and based on the control information of the previous control loop, to drive the motor (1), based on a current output position of the actuating element (4), such that the actuating element (4) will be positioned in the target output position, to control the motor (1) based on the current rotor (2) angle,

wherein the second electronic control unit is configured

to receive the second angle measurement from the second angle sensor (62), to determine the current rotor (2) angle based on the second angle of the current control loop, to determine the current output position based on the second angle of the current control loop and based on the control information of the previous control loop, to drive the motor (1), based on a current output position of the actuating element (4), such that the actuating element (4) will be positioned in the target output position, to control the motor (1) based on the current rotor (2) angle,

wherein the actuator is controlled by the first electronic control unit, wherein the first angle sensor (52) or the first electronic control unit fails, the actuator is controlled by the second electronic control unit.

9. Actuator according to claim 8, wherein in an initialization mode, the first electronic control unit is configured to receive the second angle and to determine the output position or the control information of the current control loop based on the first angle and the second angle of the current control loop using the Vernier principle, wherein in an initialization mode, the second electronic control unit is configured to receive the first angle and to determine the output position or the control information of the current control loop based on the first angle and the second angle of the current control loop using the Vernier principle.

10. Actuator according to one of claims 1 to 9, wherein the first angle sensor (52) is realized as a resolver arranged within or around the first rotational element (51) and/or the second angle sensor (62) is realized as a resolver arranged within or around the second rotational element (61).

11. Actuator according to one of claims 1 to 10, wherein the actuator is a linear actuator with the actuating element (4) performing a linear movement, wherein the rotation of the rotating element and/or rotor (2) is converted with a conversion element (3) into the linear movement of the actuating element (4).

12. Actuator according to claim 11, wherein the conversion element (3) and the rotating element is realized by a screw shaft, wherein the screw shaft has a gear, wherein the first angle sensor (52) measures the first angle of the rotation of the screw shaft or measures the first angle of a first gear wheel connected to the gear of the screw, wherein the second angle sensor (62) measures the second angle of the rotation of a second gear wheel connected to the gear of the screw.

13. Actuator according to one of claims 1 to 12, wherein the motor (1) has a plurality of motor electric current phases, wherein the motor control (8) is configured, when the failure of one motor electric current phase is detected, to adapt the motor electric current of the remaining motor electric current phases.

14. Flight control system comprising a flight control element of an aerospace vehicle and an actuator according to one of the previous claims for changing the position of the flight control element, wherein the flight control element is configured to control the movement of the aerospace vehicle based on the position of the flight control element.

15. Program comprising instructions configured, when executed in a processor of an actuator for an aerospace vehicle, to perform an actuator control (7), whose current control loop comprises the following steps:

> receive a current first angle from a first angle sensor (52) measuring the first angle of a first rotating element (51) rotatably connected with a rotor (2) of a motor (1) driving the actuating element (4);
> receive a current second angle from a second angle sensor (62) measuring the second angle of a second rotating element (61) rotatably connected with the rotor (2) of the motor (1);
> determine a current output position of the actuating element (4) and a current angle of the rotor (2) based on at least one of the current first angle and the current second angle;
> compute, based on the current output position and the current rotor (2) angle, motor control (8) signals for driving the motor (1) such that the actuating element (4) is in a target output position;
> compute a current control information based on at least one of the first angle and the second angle measured in the current control loop, wherein the current control information is configured to allow in combination with the first angle or second angle received in the subsequent control loop to determine the output position of the subsequent control loop;
> **characterized in that** the current control loop comprises further
> to check, if at least one of the first angle sensor (52) and the second angle sensor (62) fails,
> if it is determined that the first angle sensor (52) fails, the current second angle sensor (62) is used to determine the current rotor (2) angle and to determine in combination with the previous control information the current output position.

**Fig. 1**

**Fig. 2**

**Fig. 3**

53 63

**Fig. 4**

**Fig. 5**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/185250 A1 (NAKAMURA TOSHIAKI [JP] ET AL) 16 June 2022 (2022-06-16) * abstract; figure 1 * * paragraph [0023] – paragraph [0034] * * claims 1-6 * | 1-15 | INV. H02P29/028 |
| X | JP 2020 072571 A (NIHON DENSAN KK) 7 May 2020 (2020-05-07) * abstract; figure 1 * * paragraph [0008] * | 1,15 | |
| A | EP 1 512 609 A1 (TOYODA MACHINE WORKS LTD [JP]) 9 March 2005 (2005-03-09) * paragraph [0031]; figure 1 * | 1-15 | |

| TECHNICAL FIELDS SEARCHED (IPC) |
|---|
| H02P |

The present search report has been drawn up for all claims

| Place of search | Date of completion of the search | Examiner |
|---|---|---|
| Munich | 7 December 2022 | Hascher, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 5299

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2022

| Patent document cited in search report | | Publication date | Patent family member(s) | | Publication date |
|---|---|---|---|---|---|
| US 2022185250 | A1 | 16-06-2022 | CN 113678367 | A | 19-11-2021 |
| | | | DE 112020000915 | T5 | 04-11-2021 |
| | | | JP 2020182275 | A | 05-11-2020 |
| | | | KR 20210126714 | A | 20-10-2021 |
| | | | US 2022185250 | A1 | 16-06-2022 |
| | | | WO 2020217795 | A1 | 29-10-2020 |
| JP 2020072571 | A | 07-05-2020 | NONE | | |
| EP 1512609 | A1 | 09-03-2005 | EP 1512609 | A1 | 09-03-2005 |
| | | | JP 3839358 | B2 | 01-11-2006 |
| | | | JP 2004010024 | A | 15-01-2004 |
| | | | US 2005159866 | A1 | 21-07-2005 |
| | | | WO 03106244 | A1 | 24-12-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2527819 A
- US 10222233 B
- US 2015032349 A
- DE 102010046251
- EP 2852050 A